# EUROPEAN PATENT APPLICATION

(11) **EP 4 704 319 A1**
(43) Date of publication of application: **04.03.2026**
(21) Application number: 25194837.8
(22) Date of filing: 08.08.2025
(51) Int. Cl.: H02M 3/158, H02M 3/335, H02M 1/00, H02M 1/10, H02M 1/14

(54) **3LB REVERSE BOOST MODE**

(30) Priority: 29.08.2024 US 202418819857
(71) Applicant: Avago Technologies International Sales Pte. Limited, Singapore 768923 (SG)
(72) Inventor: Walley, John, Ladera Ranch, CA 92694 (US); Rahman, Ashfaqur, Timnath, CO 80547 (US)
(74) Representative: Grünecker Patent- und Rechtsanwälte PartG mbB

(57) **Abstract**

A transceiver includes a bidirectional converter, a buck-boost converter and a voltage regulator. The bidirectional converter receives downstream power and converts the downstream power into a rectified voltage. The buck-boost converter converts the rectified voltage into a buck voltage by decreasing a voltage level of the rectified voltage and the voltage regulator converts the buck voltage into a regulated voltage by reducing fluctuations in the buck voltage. In the event that the transceiver outputs upstream power, control circuitry can repurpose the voltage regulator to convert a system voltage into a load voltage by reducing fluctuations in the system voltage, repurpose the buck-boost converter to convert the load voltage into a boost voltage by increasing a voltage level of the load voltage, and repurpose the bidirectional converter to output the boost voltage in the form of upstream power.

## Description

### BACKGROUND

Electronic devices from different manufacturers that can receive a transfer of power may have a capability to also output a transfer of power.

### BRIEF DESCRIPTION OF DRAWINGS

The accompanying drawings, which are incorporated in and form a part of this specification, illustrate examples of the disclosure and, together with the description, explain principles of the examples.
FIG. 1 illustrates a functional block diagram of a device, in accordance with one or more embodiments of the disclosure.
FIG. 2 illustrates a system, in accordance with one or more embodiments of the disclosure.
FIG. 3 illustrates an exemplary schematic diagram for a bidirectional converter, in accordance with one or more embodiments of the disclosure.
FIGS. 4A, 4B and 4C illustrate exemplary schematic diagrams for a buck-boost converter, in accordance with one or more embodiments of the disclosure.
FIGS. 5A and 5B illustrate example power circuitry, in accordance with one or more embodiments of the disclosure.
FIG. 6 illustrates a system, in accordance with one or more embodiments of the disclosure.
FIGS. 7A and 7B illustrate example power circuitry, in accordance with one or more embodiments of the disclosure.
FIGS. 8A, 8B and 8C illustrate exemplary schematic diagrams for a buck-boost converter repurposed as a boost converter, in accordance with one or more embodiments of the disclosure.
FIG. 9 illustrates an exemplary schematic diagram for a bidirectional converter, in accordance with one or more embodiments of the disclosure.

In the drawings, like reference symbols and numerals indicate the same or similar components. Like elements in the various figures are denoted by like reference symbols and numerals for consistency. Unless otherwise indicated, like elements and method steps are referred to with like reference numerals.

### DETAILED DESCRIPTION OF THE INVENTION

The following describes technical solutions in this specification with reference to the accompanying drawings. Exemplary embodiments are described in detail with reference to the accompanying drawings.

The terminology used herein is for describing various examples only, and is not to be used to limit the disclosure. Unless otherwise defined, all terms, including technical and scientific terms, used herein have the same meaning as commonly understood by one of ordinary skill in the art to which this disclosure pertains and after an understanding of the disclosure of this application.

Terms, such as those defined in commonly used dictionaries, are to be interpreted as having a meaning that is consistent with their meaning in the context of the relevant art and the disclosure of this application. Although the present technology has been described by referring to certain examples, workers skilled in the art will recognize that changes may be made in form and detail without departing from the scope of the discussion.

Many electronic devices capable of receiving power can require extra circuitry to perform an additional function of outputting power. The extra circuitry can increase the cost of the electronic device and can result in an increased consumption of power. According, there is a need in the art for an improved electronic device.

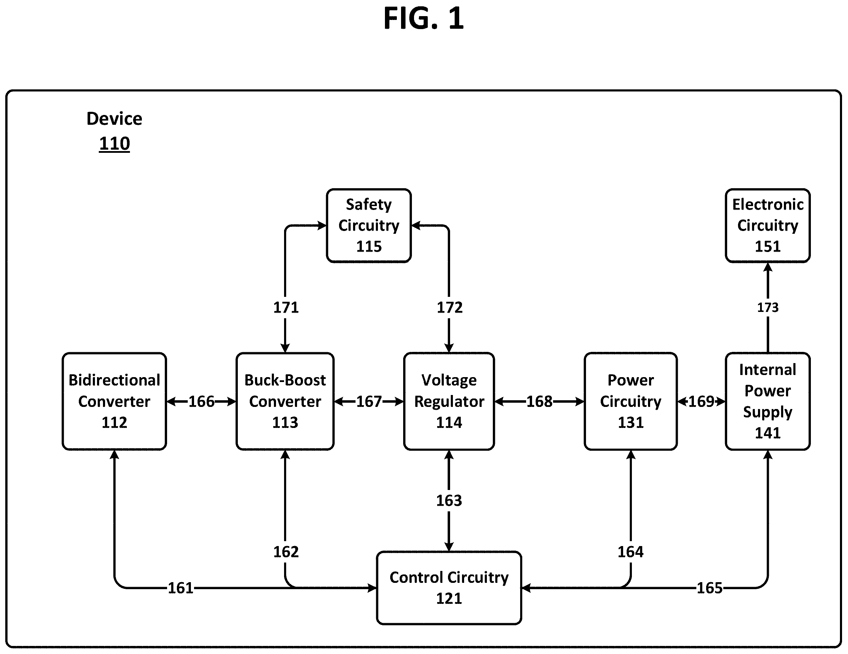

Referring to FIG. 1, a functional block diagram of device 110 according to exemplary embodiments is shown. Device 110 may include bidirectional converter 112, buck-boost converter 113, voltage regulator 114, safety circuitry 115, control circuitry 121, power circuitry 131, internal power supply 141 and electronic circuitry 151. Wiring 161-169 and 171-173 may electrically connect components in device 110 to one another. Those skilled in the art will appreciate there may be additional components in device 110. In some examples, an integrated circuit chip may include bidirectional converter 112, buck-boost converter 113 and voltage regulator 114. In other examples, an integrated circuit chip may include bidirectional converter 112, buck-boost converter 113, voltage regulator 114 and safety circuitry 115.

Device 110 may be configured as any type of electrically-powered device that has computing capability. For example, device 110 may be configured as a mobile communication device including, but not limited to, a mobile phone, a smart phone, cell phone, or tablet. Device 110 may be configured as a wearable device, a smartwatch, a fitness tracker or a personal digital assistant (PDA). In some examples, device 110 may be found in apparatuses such as autonomous vehicles, robots and drones. In other examples, device 110 may be configured as a media device (e.g., media playing and/or recording device). Device 110 may include a portable music player, an audio device such as an audio recorder, an audio converter, an audio player, or a speaker (e.g., a Bluetooth-enabled speaker). In other instances, device 110 may include a video device such as a video display, a video recorder, a camera, or other video device. In another example, device 110 may be configured as, a driver assistance module in a vehicle, an emergency transponder, a pager, a satellite television receiver, a stereo receiver, a computer system, music player, laptop or tablet computer, home appliance, or virtually any other device. Device 110 may be configured as a computer (e.g., a laptop computer). In other examples, device 110 may be configured as a computing and/or entertainment device for a vehicle. The device 110 may be any portable electronic device that can be carried by or worn on a person.

Wiring 166 may electrically connect bidirectional converter 112 with buck-boost converter 113. Wiring 167 may electrically connect buck-boost converter 113 with voltage regulator 114. As will be explained in detail, bidirectional converter 112 may be a voltage source in response to receiving downstream power and may be a voltage load in response to providing upstream power.

Safety circuitry 115 may control protective features for device 110. Safety circuitry 115 may be implemented as electronic hardware that includes digital circuits, analog circuits or a combination of both digital and analog circuits. Analog circuits may include analog components that are suitable to process analog signals. Digital circuits may include switches and gates that are suitable to process digital signals. Protective features may include but not limited to overvoltage protection, overcurrent protection, short-circuit protection and temperature protection. In response to safety circuitry 115 performing overvoltage protection, safety circuitry 115 may detect momentary voltage increases such as voltage spikes. Safety circuitry 115 may disconnect or reroute power in response to detecting a momentary voltage increase. A short circuit in device 110 may cause overheating of device 110. Safety circuitry 115, in response to performing short-circuit protection as a protective feature, may detect the short circuit and cause a disconnection of power upon detecting the short circuit. Safety circuitry 115 may monitor the operating temperature of device 110. In response to device 110 overheating, safety circuitry 115 may regulate performance aspects of device 110 the reduce the operating temperature of device 110.

Control circuitry 121 is electronic hardware implemented as any suitable processing circuitry. The processing circuitry may include, but not limited to at least one of a microcontroller, a microprocessor, a single processor, and a multiprocessor. Control circuitry 121 may include at least one of an embedded controller (EC), a central processing unit (CPU), an accelerated processing unit (APU), an application specific integrated circuit (ASIC), field programmable gate arrays (FPGA), control logic, a state machine, programmable processor, or the like. Control circuitry 121 may be implemented as electronic hardware that may include digital circuits, analog circuits or a combination of both digital and analog circuits. Analog circuits may include analog components that are suitable to process analog gate signals. Digital circuits may include switches and gates that are suitable to process digital gate signals.

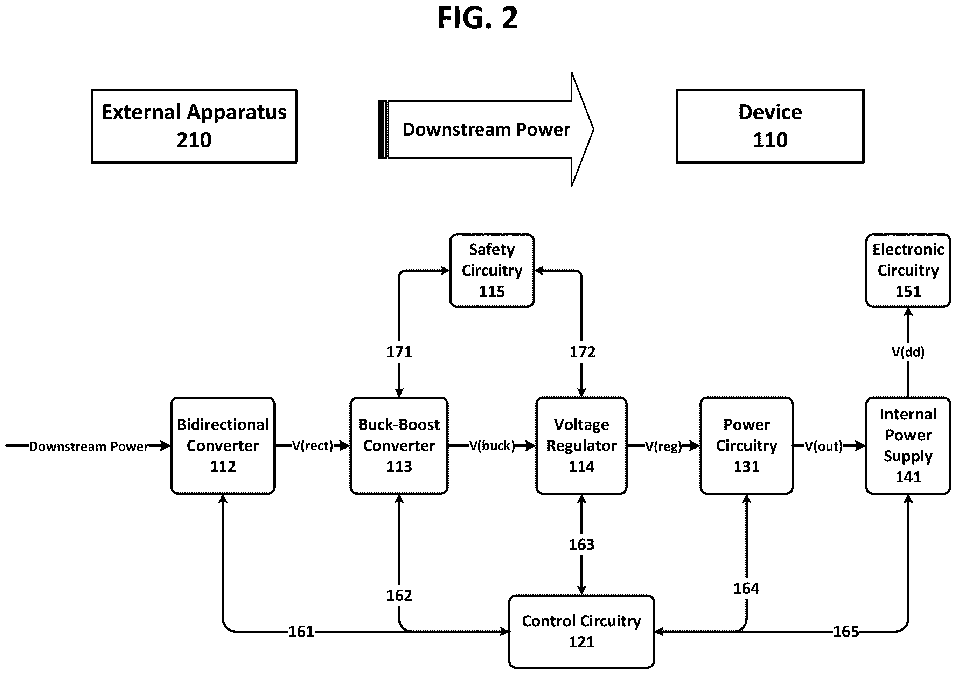

FIG. 2 illustrates a downstream power flow for a system that may include device 110 and external apparatus 210. Device 110 is removably connectable to external apparatus 210 and may also exchange information between external apparatus 210. Device 110 may serve as a receptor of downstream power, wirelessly or by wire, from external apparatus 210. The downstream power may be in the form of AC (alternating current) power and/or DC (direct current) power. In the example of FIG. 2, bidirectional converter 112 may be the voltage source with internal power supply 141 being a voltage load.

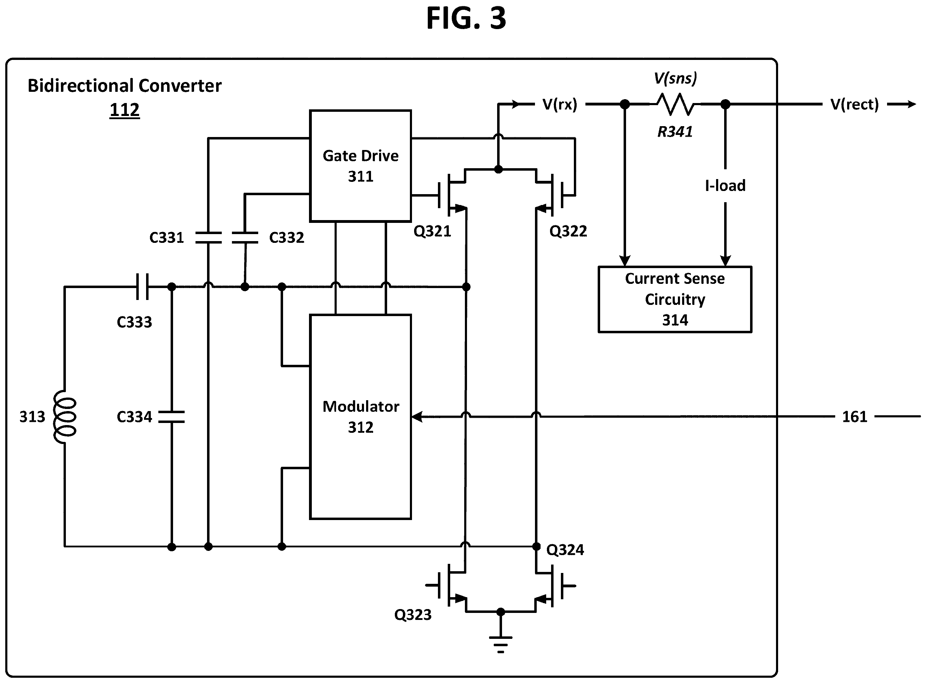

Referring to FIG. 3, an exemplary schematic diagram for bidirectional converter 112 is illustrated. Bidirectional converter 112 may include gate drive 311, modulator 312, field coil 313, current sense circuitry 314 and resistor R341. In various embodiments, the resistance of resistor R341 being 20 mΩ or less ensures that an insignificant voltage drop V(sns) may appear across resistor R341. Switches Q321-Q324 may be implemented as N-type metal-oxide-semiconductor (NMOS) transistors. Alternatively, any of the switches Q321-Q324 may be implemented as a Field Effect Transistor (FET), a bipolar transistor, a P-type metal-oxide-semiconductor (PMOS) transistor, or any other switching device. Bidirectional converter 112 may additionally include capacitors C331-C334. Those skilled in the art will appreciate there may be additional components in bidirectional converter 112.

Bidirectional converter 112 is circuitry that may rectify the downstream power into a rectified voltage V(rect). Rectified voltage V(rect) is a DC voltage. In response to producing rectified voltage V(rect), bidirectional converter 112 may transform the downstream power into rectified voltage V(rect). Bidirectional converter 112 may receive downstream power from external apparatus 210 and rectify the downstream power into a rectified voltage V(rect).

Control circuitry 121 may send a tuning instruction along wiring 161 to modulator 312. The tuning instruction may command modulator 312 to electronically tune field coil 313 to the center frequency of the downstream power. Modulator 312 may also cause gate drive 311 to control switches Q321-Q322. In reaction to electronically tuning field coil 313 to the center frequency of the downstream power, modulator 312 may cause capacitors C331-C334 to electronically tune field coil 313 to the center frequency of the downstream power and filter the downstream power upon receipt. Field coil 313 may wirelessly receive the downstream power from external apparatus 210.

In response to bidirectional converter 112 rectifying the downstream power into rectified voltage V(rect), current sense circuitry 314 may function as a current meter that samples the current flowing through resistor R341. Based on the result of the sampling, current sense circuitry 314 may perform as a current sink that brings about a flow of load current (I-load) by an amount sufficient to safeguard against voltage V(rx) falling below a predetermined threshold.

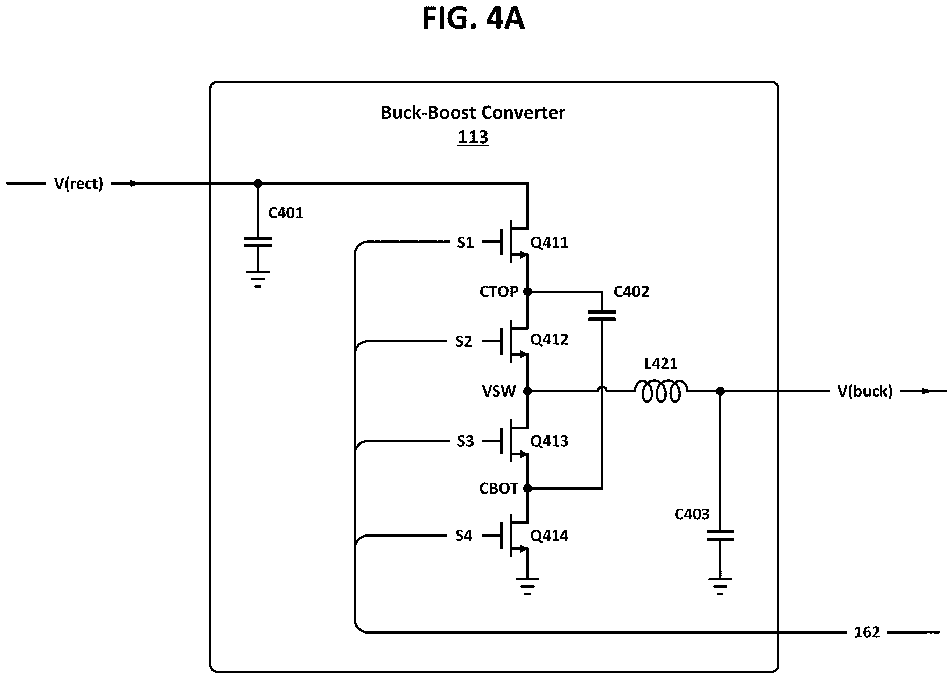

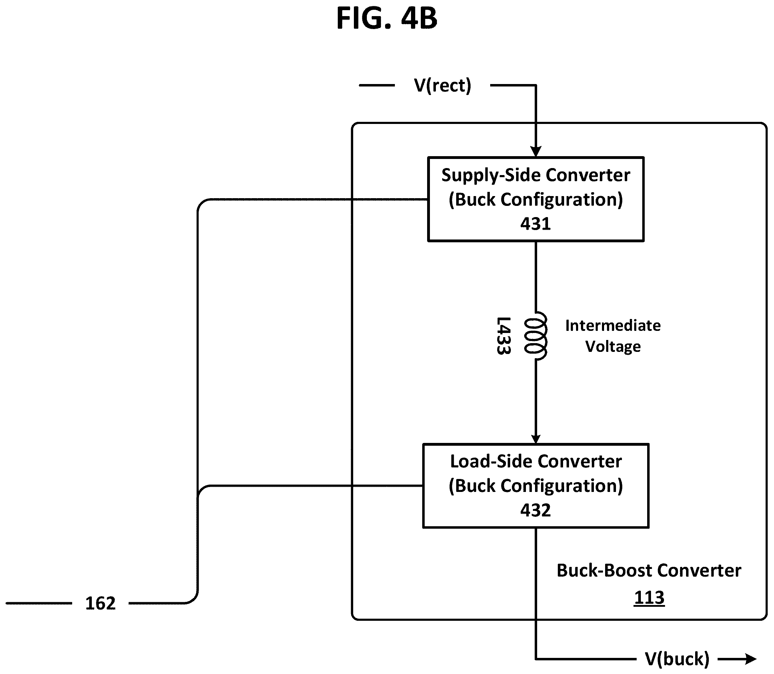

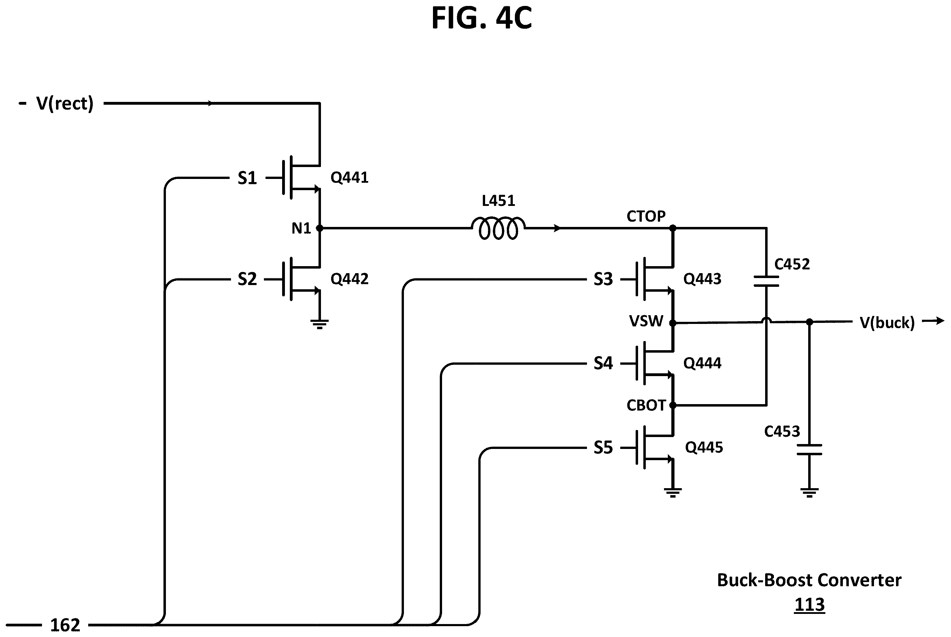

Referring to FIGS. 4A, 4B and 4C, exemplary schematic diagrams for buck-boost converter 113 are illustrated. Buck-boost converter 113 is circuitry that may perform DC-to-DC conversion on rectified voltage V(rect). Control circuitry 121 may provide, by wiring 162, signaling that configures buck-boost converter 113 as a buck converter. A buck converter, also known as a step-down converter, is circuitry that may reduce a higher-level voltage to a lower-level voltage while concurrently increasing the current of the lower-level voltage to an amount greater than a current associated with the higher-level voltage. Buck-boost converter 113 may receive rectified voltage V(rect) from bidirectional converter 112 and perform DC-to-DC conversion on rectified voltage V(rect). In response to performing DC-to-DC conversion on rectified voltage V(rect), buck-boost converter 113 may step down regulated voltage V(reg) to the buck voltage V(buck). The voltage level of the buck voltage V(buck) is lower than the voltage level of rectified voltage V(rect).

Illustrated in FIG. 4A, buck-boost converter 113 may include input capacitor C401, flying capacitor 412, shunt capacitor C403 and switches Q411 - Q414. Switches Q411 - Q414 may be implemented as n-type metal-oxide-semiconductor (NMOS) transistors. Alternatively, any of the switches Q411 - Q414 may be implemented as a Field Effect Transistor (FET), a bipolar transistor, a p-type metal-oxide-semiconductor (PMOS) transistor, or any other switching device. Buck-boost converter 113 may also include inductor L421. Wiring 162 may include signal lines S1-S4, which are coupled to gate electrodes of switches Q411 - Q414. Control circuitry 121 may output, onto signal lines S1-S4, signaling that configures buck-boost converter 113 as a buck converter.

The drain of switch Q411 may be coupled to input capacitor C401. Via node CTOP, a terminal of flying capacitor C402 may be coupled to the source of switch Q411 and the drain of switch Q412. Via node CBOT, another terminal of flying capacitor C402 may be coupled to the source of switch Q413 and the drain of switch Q414. Via Node VSW, a terminal of inductor L421 may be coupled to the source of switch Q412 and the drain switch Q413. The source of switch Q414, another terminal of input capacitor C401 and a terminal of shunt capacitor C403 may be coupled to ground. Another terminal of inductor L421 may be coupled to another terminal of shunt capacitor C403.

Illustrated in FIG. 4B, buck-boost converter 113 may include supply-side converter 431 in series with load-side converter 432. Control circuitry 121 may output, onto signal lines S1-S4, signaling that configures buck-boost converter 113 as a buck converter. Inductor L433 is wired between supply-side converter 431 and load-side converter 432. Supply-side converter 431 may receive rectified voltage V(rect) from bidirectional converter 112 and perform DC-to-DC conversion on rectified voltage V(rect). As a result of performing DC-to-DC conversion on rectified voltage V(rect), supply-side converter 431 may step down rectified voltage V(rect) to an intermediate voltage. The voltage level of the intermediate voltage is lower than the voltage level of rectified voltage V(rect). Load-side converter 432 may step down the intermediate voltage to the buck voltage V(buck). The voltage level of the buck voltage V(buck) is lower than the voltage level of the intermediate voltage.

As illustrated in FIG. 4C, buck-boost converter 113 may include switch Q441, switch Q442, inductor L451, switch Q443, switch Q444, switch Q445, flying capacitor C452 and shunt capacitor C453. The flying capacitor C452 and shunt capacitor C453 may be components of electronic circuitry 151. The drain of switch Q441 may be coupled to the output of bidirectional converter 112. As a result of being coupled to the output of bidirectional converter 112, the drain of switch Q441 may receive rectified voltage V(rect) from bidirectional converter 112. The source of switch Q441 may be coupled to the drain switch Q442. Via node N1, a first terminal of inductor L451 may be coupled to the source of switch Q441 and the drain switch Q442. The source of switch Q442 may be coupled to ground.

A second terminal of inductor L451 may be coupled to the drain of switch Q443. As a result of being coupled to the second terminal of inductor L451, the drain of switch Q443 may receive buck voltage V(buck) from the inductor L451. The source of switch Q443 may be coupled to the drain of switch Q444. The source of switch Q444 may be coupled to the drain of switch Q445 and the source of switch Q445 may be coupled to ground. Via node CBOT, the first terminal of flying capacitor C452 may be coupled to the source of switch Q444 and the drain of switch Q445. Via node CTOP, the second terminal of flying capacitor C452 may be coupled to the drain of switch Q443 and the second terminal of inductor L451. Node VSW may be coupled to the source of switch Q443 and the drain switch Q444. Adjusted DC voltage (Vout) may appear at node VSW. A first terminal of shunt capacitor C453 may be coupled to node VSW and a second terminal of shunt capacitor C453 may be coupled to ground.

Safety circuitry 115 may, by wiring 171, monitor performance of buck-boost converter 113 while buck-boost converter 113 receives rectified voltage V(rect) from bidirectional converter 112 and perform DC-to-DC conversion on rectified voltage V(rect). For example, safety circuitry 115 may monitor performance of buck-boost converter 113 to detect momentary voltage increases in buck-boost converter 113. A momentary voltage increase may include one or more voltage spikes. In response to detecting the momentary voltage increase, safety circuitry 115 may reroute rectified voltage V(rect) away from buck-boost converter 113 or disconnect buck-boost converter 113 from bidirectional converter 112 and voltage regulator 114. Safety circuitry 115 may monitor performance of buck-boost converter 113 to detect a short circuit in buck-boost converter 113. A short circuit in buck-boost converter 113 may cause overheating of buck-boost converter 113. In response to detecting a short circuit in buck-boost converter 113, safety circuitry 115 may reroute rectified voltage V(rect) away from buck-boost converter 113 or disconnect buck-boost converter 113 from bidirectional converter 112 and voltage regulator 114. Safety circuitry 115 may monitor the operating temperature of buck-boost converter 113 to detect overheating of buck-boost converter 113. In response to detecting overheating, safety circuitry 115 may regulate performance aspects of buck-boost converter 113 to reduce the operating temperature of buck-boost converter 113.

Wiring 167 may couple buck-boost converter 113 with voltage regulator 114. Voltage regulator 114 is circuitry that may reduce or eliminate voltage fluctuations that may appear in the buck voltage V(buck). Voltage fluctuations are transients in the voltage level of a voltage. Transients may include voltage spikes, momentary voltage increases and decreases, voltage ripple and/or other sudden uncontrolled transitions in the voltage. Control circuitry 121 may, by wiring 163, provide signaling that configures voltage regulator 114 to convert the buck voltage V(buck) into a regulated voltage V(reg). Regulated voltage V(reg) is a DC voltage. As a result of converting rectified voltage V(rect) into regulated voltage V(reg), voltage regulator 114 may maintain regulated voltage V(reg) at a constant voltage level despite any fluctuation in rectified voltage V(rect).

Safety circuitry 115 may, by wiring 172, monitor performance of voltage regulator 114 while voltage regulator 114 receives buck voltage V(buck) from buck-boost converter 113. For example, safety circuitry 115 may monitor performance of voltage regulator 114 to detect momentary voltage increases in voltage regulator 114. A momentary voltage increase may include one or more voltage spikes. In response to detecting the momentary voltage increase, safety circuitry 115 may reroute buck voltage V(buck) away from voltage regulator 114 or disconnect voltage regulator 114 from buck-boost converter 113 and power circuitry 131. Safety circuitry 115 may monitor performance of voltage regulator 114 to detect a short circuit in voltage regulator 114. A short circuit in voltage regulator 114 may cause overheating of voltage regulator 114. In response to detecting a short circuit in voltage regulator 114, safety circuitry 115 may reroute buck voltage V(buck) away from voltage regulator 114 or disconnect voltage regulator 114 from buck-boost converter 113 and power circuitry 131. Safety circuitry 115 may monitor the operating temperature of voltage regulator 114 to detect overheating of voltage regulator 114. In response to detecting overheating, safety circuitry 115 may regulate performance aspects of voltage regulator 114 to reduce the operating temperature of voltage regulator 114.

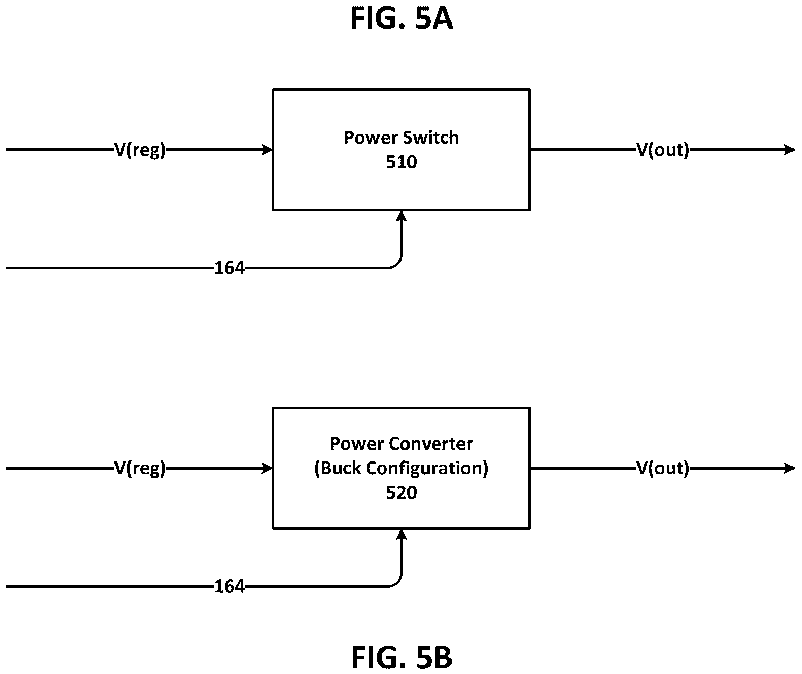

Power circuitry 131 may regulate the flow of electrical power from voltage regulator 114 to internal power supply 141. FIGS. 5A and 5B illustrate examples of power circuitry 131. As illustrated in the example of FIG. 5A, control circuitry 121 may, by wiring 164, provide signaling that configures power circuitry 131 as power switch 510. Power switch 510 is circuitry that may control the flow direction of electrical power between voltage regulator 114 and internal power supply 141. Power switch 510 may flow regulated voltage V(reg) to internal power supply 141 in the form of an adjusted DC voltage V(out).

As illustrated in the example of FIG. 5B, control circuitry 121 may, by wiring 164, provide signaling that configures power circuitry 131 as power converter 520. Power converter 520 may perform DC-to-DC conversion as a buck converter. A buck converter, also known as a step-down converter, is circuitry that may reduce a higher-level voltage to a lower-level voltage while concurrently increasing the current of the lower-level voltage to an amount greater than a current associated with the higher-level voltage. As a result of performing DC-to-DC conversion on regulated voltage V(reg) as a buck converter, power converter 520 may step down regulated voltage V(reg) to the adjusted DC voltage V(out). The voltage level of the adjusted DC voltage V(out) is lower than the voltage level of regulated voltage V(reg).

Internal power supply 141 may include a battery and/or a battery pack. Power circuitry 131 may output the adjusted DC voltage V(out) to internal power supply 141 to charge internal power supply 141 with the adjusted DC voltage V(out). Control circuitry 121 may, by wiring 165, provide signaling that configures internal power supply 141 to store the adjusted DC voltage V(out) while also providing a supply voltage V(dd) to electronic circuitry 151.

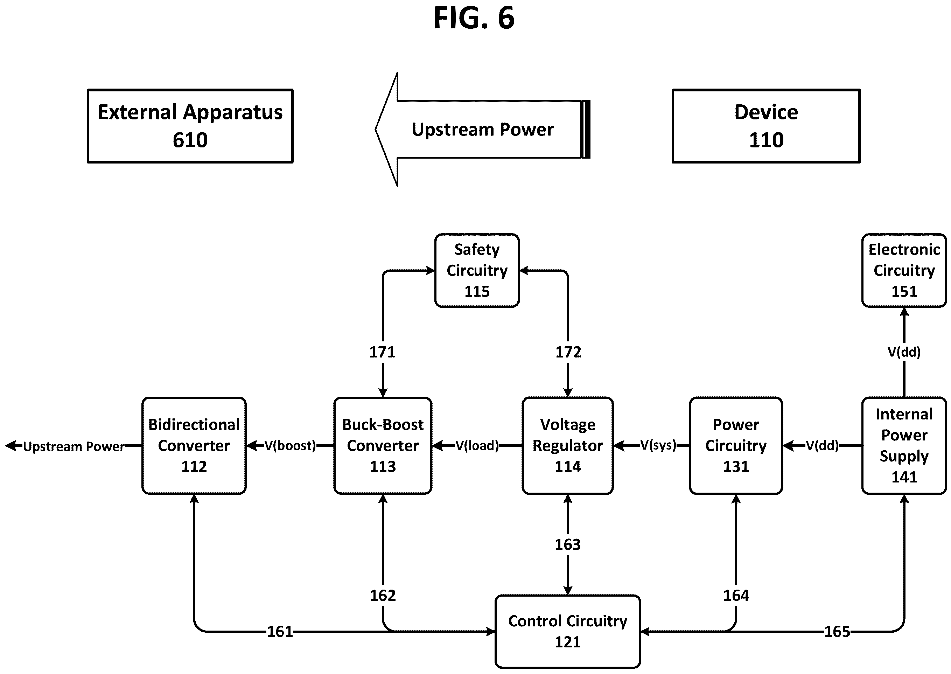

FIG. 6 illustrates an upstream power flow for a system that may include device 110 and external apparatus 610. Those skilled in the art will appreciate that external apparatus 210 and external apparatus 610 may be one in the same. Alternatively, external apparatus 210 and external apparatus 610 may be separate and distinct electronic devices.

Device 110 is removably connectable to external apparatus 610 and may also exchange information with external apparatus 610. Device 110 may serve as a source of upstream power, wirelessly or by wire, to external apparatus 610. The upstream power may be in the form of AC power and/or DC power. Internal power supply 141 may be the voltage source in the example of FIG. 6 along with bidirectional converter 112 being the voltage load. Control circuitry 121 may, by wiring 165, provide signaling that configures internal power supply 141 to provide the supply voltage V(dd) to electronic circuitry 151 and power circuitry 131.

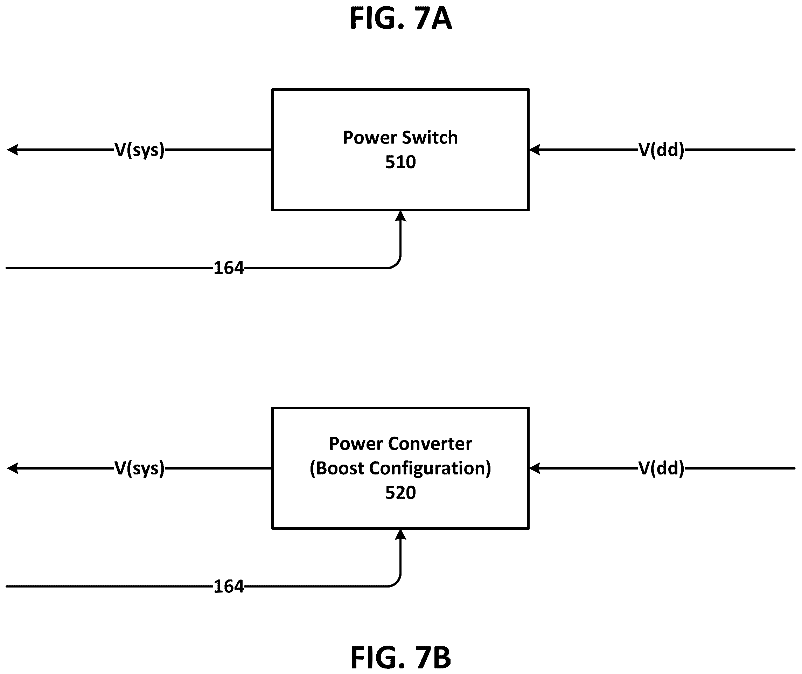

FIGS. 7A and 7B illustrate example power circuitry 131, which may regulate the flow of electrical power from internal power supply 141 to voltage regulator 114. Control circuitry 121 may, by wiring 164, provide signaling that configures power circuitry 131 as power switch 510 in the example of FIG. 7A. Power switch 510 is circuitry that may control the flow direction of electrical power between internal power supply 141 and voltage regulator 114. In the example of FIG. 7A, power switch 510 may flow supply voltage V(dd) to voltage regulator 114 in the form of a system voltage V(sys).

As illustrated in FIG. 7B, control circuitry 121 may, by wiring 164, provide signaling that configures power circuitry 131 as power converter 520. Power converter 520 may perform DC-to-DC conversion as a boost converter. A boost converter, also known as a step-up converter, is circuitry that may increase a lower-level voltage to a higher-level voltage while concurrently decreasing the current of the lower-level voltage to an amount less than a current associated with the lower-level voltage. As a result of performing DC-to-DC conversion on supply voltage V(dd), power converter 520 may step up supply voltage V(dd) to the system voltage V(sys). The voltage level of the system voltage V(sys) is higher than the voltage level of supply voltage V(dd).

Voltage regulator 114 is circuitry that may reduce or eliminate voltage fluctuations that may appear in a load voltage V(load). Load voltage V(load) is a DC voltage. Control circuitry 121 may, by wiring 163, provide signaling that configures voltage regulator 114 to convert the system voltage V(sys) into the load voltage V(load). In response to converting the system voltage V(sys) into load voltage V(load), voltage regulator 114 may maintain load voltage V(load) at a constant voltage level despite any fluctuation in the system voltage V(sys).

Safety circuitry 115 may, by wiring 172, monitor performance of voltage regulator 114 while voltage regulator 114 receives system voltage V(sys) from power circuitry 131. For example, safety circuitry 115 may monitor performance of voltage regulator 114 to detect momentary voltage increases in voltage regulator 114. A momentary voltage increase may include one or more voltage spikes. In response to detecting the momentary voltage increase, safety circuitry 115 may reroute system voltage V(sys) away from voltage regulator 114 or disconnect voltage regulator 114 from buck-boost converter 113 and power circuitry 131. Safety circuitry 115 may monitor performance of voltage regulator 114 to detect a short circuit in voltage regulator 114. A short circuit in voltage regulator 114 may cause overheating of voltage regulator 114. In response to detecting a short circuit in voltage regulator 114, safety circuitry 115 may reroute system voltage V(sys) away from voltage regulator 114 or disconnect voltage regulator 114 from buck-boost converter 113 and power circuitry 131. Safety circuitry 115 may monitor the operating temperature of voltage regulator 114 to detect overheating of voltage regulator 114. In response to detecting overheating, safety circuitry 115 may regulate performance aspects of voltage regulator 114 to reduce the operating temperature of voltage regulator 114.

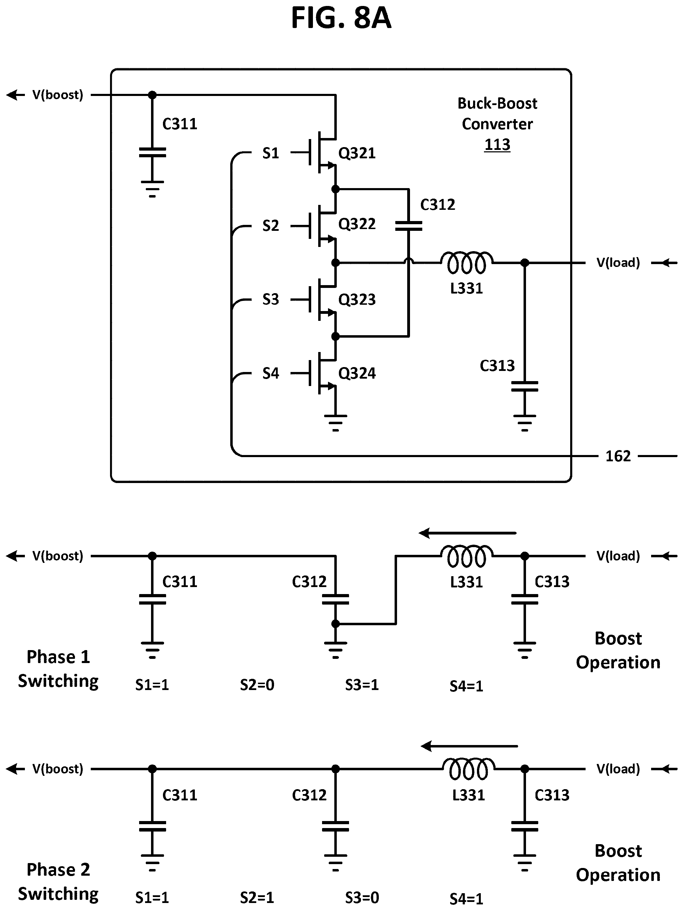

Referring to FIG. 8A, an exemplary schematic diagram for buck-boost converter 113 is illustrated. Buck-boost converter 113 is circuitry that may perform DC-to-DC conversion on load voltage V(load). Control circuitry 121 may provide, by wiring 162, signaling that configures buck-boost converter 113 in a reverse mode as a boost converter. A boost converter, also known as a step-up converter, is circuitry that may increase load voltage V(load) from a lower-level voltage to a boost voltage V(boost), which is a higher-level voltage, while concurrently decreasing a current associated with the boost voltage V(boost) to an amount less than a current associated with load voltage V(load).

Control circuitry 121 may output, onto wiring 162, signals S1-S4 that provide phase 1 switching and phase 2 switching in buck-boost converter 113. By way of illustration in FIG. 8A, signals S1 and S4 may remain at logic 1 during both phase 1 switching and phase 2 switching to place switches Q321 and Q324 in a conductive state. Signals S2 and S3 may alternate between logic 0 and logic 1 so as to place switches Q322 and Q323 in both a non-conductive state and a conductive state as illustrated in the example of FIG. 8A.

In the reverse mode, buck-boost converter 113 may receive load voltage V(load) from voltage regulator 114 and perform DC-to-DC conversion on load voltage V(load). In response to performing DC-to-DC conversion on load voltage V(load), buck-boost converter 113 may step up load voltage V(load) to the boost voltage V(boost). The voltage level of the boost voltage V(boost) is higher than the voltage level of load voltage V(load).

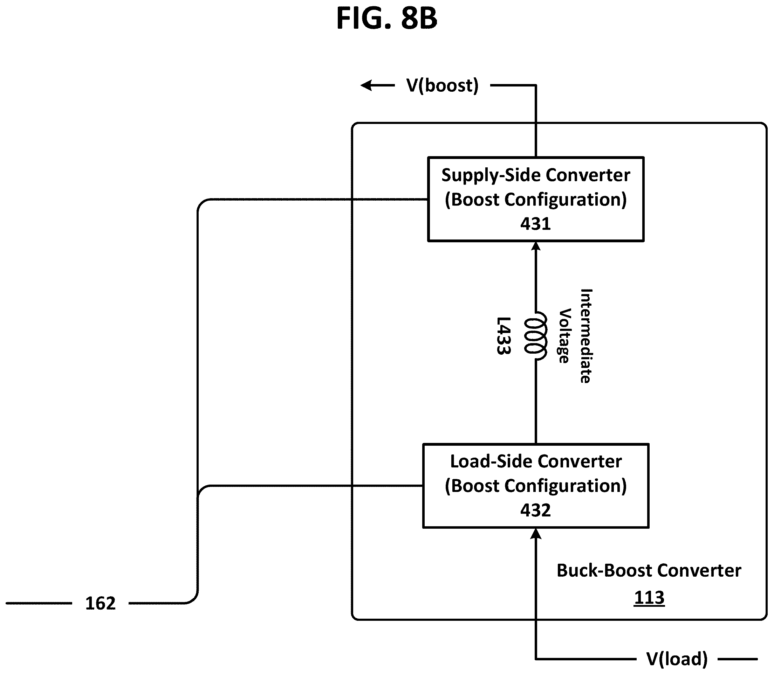

Illustrated in FIG. 8B, buck-boost converter 113 may include supply-side converter 431 in series with load-side converter 432. Control circuitry 121 may provide, by wiring 162, signaling that configures buck-boost converter 113 in a reverse mode as a boost converter. Inductor L433 is wired between supply-side converter 431 and load-side converter 432. Load-side converter 432 may receive load voltage V(load) from voltage regulator 114 and perform DC-to-DC conversion on load voltage V(load). In response to performing DC-to-DC conversion on load voltage V(load), load-side converter 432 may step up load voltage V(load) to an intermediate voltage. The voltage level of the intermediate voltage is higher than the voltage level of the boost voltage V(boost). Supply-side converter 431 may step up the intermediate voltage to the boost voltage V(boost). The voltage level of the boost voltage V(boost) is higher than the voltage level of the intermediate voltage.

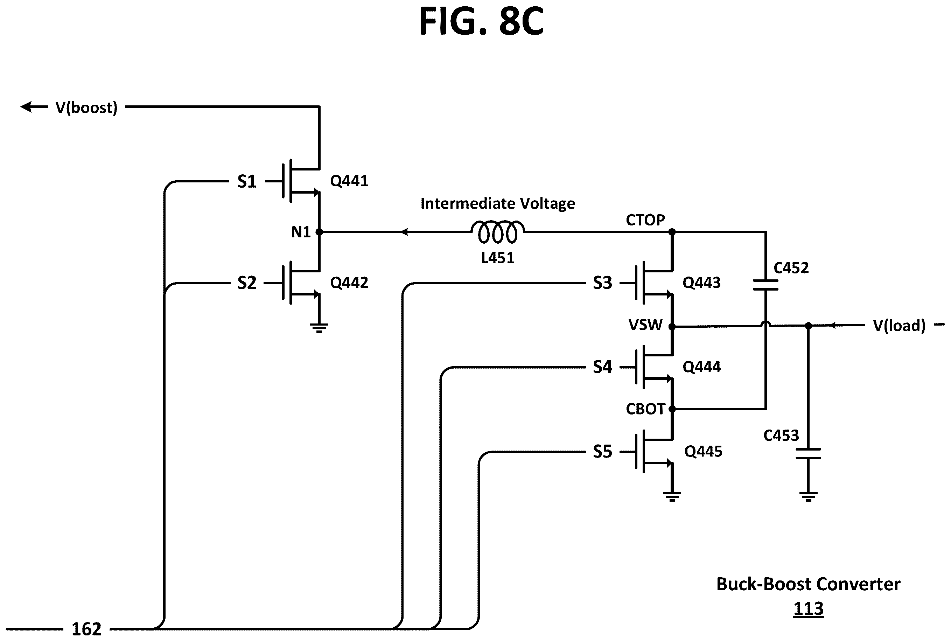

As illustrated in FIG. 8C, load voltage V(load) may appear at node VSW in buck-boost converter 113. Control circuitry 121 may provide, by wiring 162, signaling that configures buck-boost converter 113 in a reverse mode as a boost converter. Buck-boost converter 113 may perform DC-to-DC conversion on load voltage V(load). In response to performing DC-to-DC conversion on load voltage V(load), buck-boost converter 113 may step up load voltage V(load) to an intermediate voltage across inductor L451. The voltage level of the intermediate voltage is higher than the voltage level of the boost voltage V(boost). Buck-boost converter 113 may step up the intermediate voltage to the boost voltage V(boost). The voltage level of the boost voltage V(boost) is higher than the voltage level of the intermediate voltage.

Safety circuitry 115 may, by wiring 171, monitor performance of buck-boost converter 113 while buck-boost converter 113 receives load voltage V(load) from voltage regulator 114 and perform DC-to-DC conversion on load voltage V(load). For example, safety circuitry 115 may monitor performance of buck-boost converter 113 to detect momentary voltage increases in buck-boost converter 113. A momentary voltage increase may include one or more voltage spikes. In response to detecting the momentary voltage increase, safety circuitry 115 may reroute load voltage V(load) away from buck-boost converter 113 or disconnect buck-boost converter 113 from bidirectional converter 112 and voltage regulator 114. Safety circuitry 115 may monitor performance of buck-boost converter 113 to detect a short circuit in buck-boost converter 113. A short circuit in buck-boost converter 113 may cause overheating of buck-boost converter 113. In response to detecting a short circuit in buck-boost converter 113, safety circuitry 115 may reroute load voltage V(load) away from buck-boost converter 113 or disconnect buck-boost converter 113 from bidirectional converter 112 and voltage regulator 114. Safety circuitry 115 may monitor the operating temperature of buck-boost converter 113 to detect overheating of buck-boost converter 113. In response to detecting overheating, safety circuitry 115 may regulate performance aspects of buck-boost converter 113 to reduce the operating temperature of buck-boost converter 113.

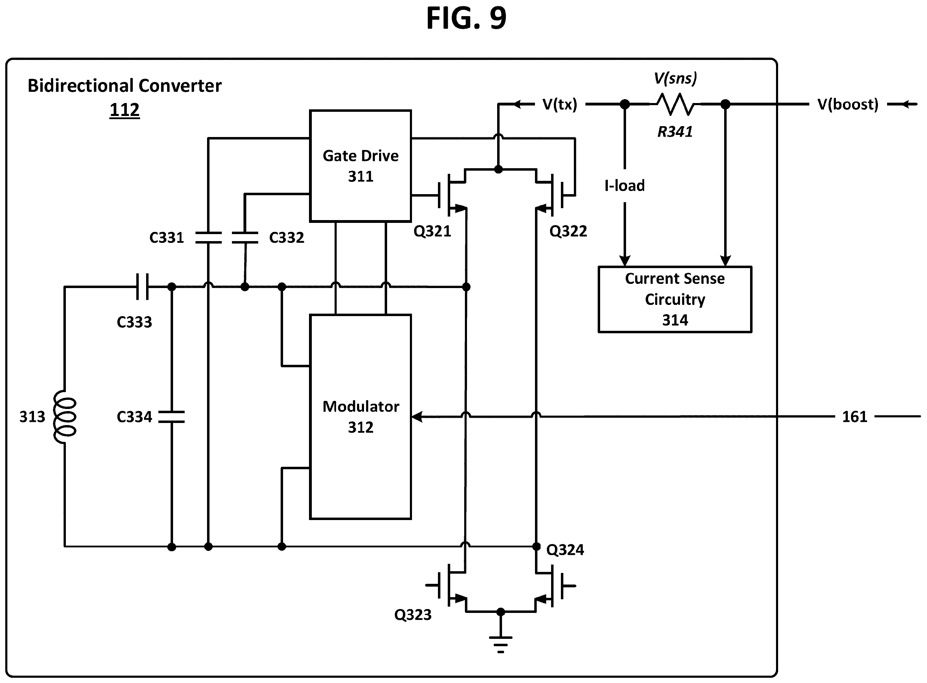

Referring to FIG. 9, an exemplary schematic diagram for bidirectional converter 112 is illustrated. Bidirectional converter 112 may transform the boost voltage V(boost) into upstream power for transmission to external apparatus 610. As a result of bidirectional converter 112 transforming the boost voltage V(boost) into upstream power, current sense circuitry 314 may function as a current meter that samples the current flowing through resistor R341. Based on the result of the sampling, current sense circuitry 314 may perform as a current sink that brings about a flow of load current (I-load) by an amount sufficient to safeguard against voltage V(tx) falling below a predetermined threshold. Those skilled in the art will appreciate that voltage V(tx) is the boost voltage V(boost) minus V(sns).

Bidirectional converter 112 may wirelessly transmit upstream power to external apparatus 610 in some instances. Control circuitry 121 may send a tuning instruction along wiring 161 to modulator 312. The tuning instruction may command modulator 312 to electronically tune field coil 313 to the center frequency of the upstream power. Those skilled in the art will appreciate that a center frequency for the upstream power may differ from the center frequency for downstream power. For example, the center frequency for the upstream power may be higher than the center frequency for downstream power.

Modulator 312 may also cause gate drive 311 to control switches Q321-Q322. In response to electronically tuning field coil 313 to the center frequency of the upstream power, modulator 312 may cause capacitors C331-C334 to electronically tune field coil 313 to the center frequency of the upstream power and filter the upstream power upon receipt. Field coil 313 may wirelessly transmit the upstream power to external apparatus 210. In other instances, bidirectional converter 112 transmit upstream power to external apparatus 610 by wire.

In the example device 110, transceiver 111 may include bidirectional converter 112, buck-boost converter 113 and voltage regulator 114. Bidirectional converter 112, buck-boost converter 113 and voltage regulator 114 are in operation in due to the transceiver 111 receiving downstream power. Control circuitry 121 may repurpose bidirectional converter 112, buck-boost converter 113 and voltage regulator 114 for operation during the times whenever the transceiver 111 outputs upstream power. This repurposing may result in a decreased power consumption and cost of device 110.

Those skilled in the art will also appreciate the arrangement or interconnection of components such as "coupled," "connected," "on," "under," or similar wording allows for indirect connections, or intervening components or layers.

Certain operations of methods according to the technology, or of systems executing those methods, may be represented schematically in the figures or otherwise discussed herein. Unless otherwise specified or limited, representation in the figures of particular operations in particular spatial order may not necessarily require those operations to be executed in a particular sequence corresponding to the particular spatial order. Correspondingly, certain operations represented in the figures, or otherwise disclosed herein, may be executed in different orders than are expressly illustrated or described, as appropriate for particular examples of the technology. Further, in some examples, certain operations may be executed in parallel or partially in parallel, including by dedicated parallel processing devices, or separate computing devices configured to interoperate as part of a large system.

As used herein, unless otherwise limited or defined, "or" indicates a non-exclusive list of components or operations that may be present in any variety of combinations, rather than an exclusive list of components that may be present only as alternatives to each other. For example, a list of "A, B, or C" indicates options of: A; B; C; A and B; A and C; B and C; and A, B, and C.

Correspondingly, the term "or" as used herein is intended to indicate exclusive alternatives only in response to preceded by terms of exclusivity, such as, e.g., "either," "only one of," or "exactly one of." Further, a list preceded by "one or more" (and variations thereon) and including "or" to separate listed elements indicates options of one or more of any or all of the listed elements.

For example, the phrases "one or more of A, B, or C" and "at least one of A, B, or C" indicate options of: one or more A; one or more B; one or more C; one or more A and one or more B; one or more B and one or more C; one or more A and one or more C; and one or more of each of A, B, and C.

Similarly, a list preceded by "a plurality of" (and variations thereon) and including "or" to separate listed elements indicates options of multiple instances of any or all of the listed elements. For example, the phrases "a plurality of A, B, or C" and "two or more of A, B, or C" indicate options of: A and B; B and C; A and C; and A, B, and C.

In general, the term "or" as used herein only indicates exclusive alternatives (e.g., "one or the other but not both") in response to preceded by terms of exclusivity, such as, e.g., "either," "only one of," or "exactly one of."

Any mark, if referenced herein, may be common law or registered trademarks of third parties affiliated or unaffiliated with the applicant or the assignee. Use of these marks is by way of example and shall not be construed as descriptive or to limit the scope of disclosed or claimed embodiments to material associated only with such marks.

The articles "a," "an," and "the" are intended to include the plural forms as well, unless the context clearly indicates otherwise.

The terms "comprises," "includes," and "has" specify the presence of stated features, numbers, operations, members, elements, and/or combinations thereof, but do not preclude the presence or addition of one or more other features, numbers, operations, members, elements, and/or combinations thereof.

Throughout the application, ordinal numbers (e.g., first, second, third, etc.) may be used as an adjective for an element (i.e., any noun in the application).

Although terms such as "first," "second," and "third" may be used herein to describe various members, components, regions, layers, or sections, these members, components, regions, layers, or sections are not to be limited by these terms.

Rather, these terms are only used to distinguish one member, component, region, layer, or section from another member, component, region, layer, or section.

The use of ordinal numbers is not to imply or create any particular ordering of the elements nor to limit any element to being only a single element unless expressly disclosed, such as by the use of the terms "before," "after," "single," and other such terminology.

Rather, the use of ordinal numbers is to distinguish between the elements.

By way of an example, a first element is distinct from a second element, and the first element may encompass more than one element and succeed (or precede) the second element in an ordering of elements.

Thus, a first member, component, region, layer, or section referred to in examples described herein may also be referred to as a second member, component, region, layer, or section without departing from the teachings of the examples.

## Claims

1. A transceiver comprising:
a bidirectional converter configured to convert, in response to receiving downstream power, the downstream power into a rectified voltage;
a buck-boost converter configured to convert, by decreasing a voltage level of the rectified voltage, the rectified voltage into a buck voltage; and
a voltage regulator configured to convert, by reducing fluctuations in the buck voltage, the buck voltage into a regulated voltage.

2. The transceiver according to claim 1, wherein the bidirectional converter is configured to receive the downstream power wirelessly or by wire.

3. The transceiver of one of the previous claims, wherein the bidirectional converter is configured to receive the rectified voltage from wiring electrically connecting the buck-boost converter with the bidirectional converter,
and/or
wherein the bidirectional converter is configured to output the buck voltage onto wiring electrically connecting the buck-boost converter with the voltage regulator.

4. The transceiver of one of the previous claims, wherein the buck-boost converter is configured to convert, by increasing a load voltage, the load voltage into a boost voltage,
in particular,
wherein the voltage regulator is configured to convert, by reducing fluctuations in a system voltage, the system voltage into the load voltage.

5. The transceiver according to claim 4, wherein the bidirectional converter is configured to convert, in response to outputting upstream power, the boost voltage into the upstream power,
in particular,
wherein the bidirectional converter is configured to output the upstream power wirelessly.

6. The transceiver according to claim 5, wherein the bidirectional converter is configured to output the upstream power by wire.

7. A system comprising:
the transceiver according to claim 4; and
an external apparatus configured to receive upstream power from the transceiver.

8. A system comprising:
the transceiver of one of the previous claims; and
an external apparatus configured to output the downstream power to the transceiver.

9. A device comprising:
a bidirectional converter configured to convert, in response to receiving downstream power, the downstream power into a rectified voltage;
a buck-boost converter configured to convert, by decreasing a voltage level of the rectified voltage, the rectified voltage into a buck voltage;
a voltage regulator configured to convert, by reducing fluctuations in the buck voltage, the buck voltage into a regulated voltage; and
power circuitry configured to regulate, to an internal power supply, a flow of the regulated voltage.

10. The device according to claim 9, wherein:
the power circuitry is configurable as a power switch,
the power switch is configured to control, in response to regulating the flow of the regulated voltage, a flow direction of the regulated voltage to the internal power supply.

11. The device according to claim 9, wherein:
the power circuitry is configurable as a buck converter,
the buck converter is configured to decrease, in response to regulating the flow of the regulated voltage, the regulated voltage to an adjusted DC voltage.

12. The device according to claim 9, wherein the power circuitry is configured to receive a supply voltage from the internal power supply.

13. The device according to claim 12, wherein:
the power circuitry is configurable as a power switch,
the power switch is configured to control, in response to receiving the supply voltage from the internal power supply, a flow direction of the supply voltage to the voltage regulator.

14. The device according to claim 12, wherein:
the power circuitry is configurable as a boost converter,
the boost converter is configured to increase, in response to receiving the supply voltage from the internal power supply, the supply voltage to a system voltage.

15. The device according to claim 14, wherein the voltage regulator is configured to convert, by reducing fluctuations in the system voltage, the system voltage into a load voltage,
in particular,
wherein the boost converter is configured to convert, by increasing the load voltage, the load voltage into a boost voltage.
